# FASCICULE DE BREVET EUROPEEN

(11) **EP 0 940 372 B1**
(45) Date de publication et mention de la délivrance du brevet: **15.06.2005**
(21) Numéro de dépôt: 99400387.9
(22) Date de dépôt: 18.02.1999
(51) Int. Cl.: C03B 29/02, C03B 25/02, C03B 25/087, C03B 29/10, C03B 32/00

(54) **Installation pour le traitement thermique de plaques de verre**
Vorrichtung zur thermischen Behandlung von Glastafeln
Apparatus for thermal treatment of glass sheets

(30) Priorité: 06.03.1998 DE 19809582
(43) Date de publication de la demande: 08.09.1999
(73) Titulaire: Saint-Gobain Glass France, 92400 Courbevoie (FR)
(72) Inventeur: Becker, Guido, 53937 Schleiden-Gemuend (DE); Funke, Bodo, 53937 Schleiden-Gemuend (DE)
(74) Mandataire: Muller, René

(56) Documents cités:
- DD-B- 159 769
- DE-A- 2 043 942
- FR-A- 1 407 725
- US-A- 1 689 048
- US-A- 2 262 545

## Description

La présente invention concerne une installation pour le traitement thermique de plaques de verre présentant les particularités de la partie non caractérisante de la revendication 1.

Le document DE-2 043 942 B2 décrit en détail un traitement thermique de plaques de verre qui est utilisé pour sélectionner des plaques de verre trempé susceptibles de se briser spontanément après une période relativement longue sur leur lieu d'installation, par exemple la façade d'un bâtiment. Ce procédé est appelé traitement de vieillissement, ou encore «Heat-Soak-Test». Il peut être mis en oeuvre avant ou après la trempe des plaques de verre.

Les facteurs déclenchant la destruction spontanée des plaques de verre trempé sont les grains de sulfure de nickel qu'elles renferment, qui grandissent au fil du temps et finissent par faire éclater le verre. Afin d'éviter des dépenses d'un niveau disproportionné lors de la vérification des matières premières, de la fonte du verre et du contrôle des plaques, le procédé Heat-Soak-Test simule pour toutes les plaques traitées une période assez longue dans des conditions d'utilisation. Les plaques susceptibles de se briser spontanément comme cela a été décrit ne résistent pas à ce test, tandis que l'on peut considérer que les plaques non détruites peuvent être utilisées sans crainte.

Le document précité décrit un four chauffé par brûleur, dans lequel les plaques de verre individuelles le traversant peuvent être chauffées au moyen d'air chaud en circulation, mais qui ne comprend pas de soufflante. Différentes évolutions de la température au fil du temps et différents intervalles de temps sont également étudiés pour l'exécution du test. Le domaine de températures intéressant se situe entre 100 et 400°C et les durées des opérations vont jusqu'à plusieurs heures.

La demande pour des revêtements de façade en plaques de verre trempées est très importante. Du point de vue économique, il faut obtenir des résultats de test reproductibles en un court laps de temps pour de grandes quantités. Cette exigence est satisfaite, entre autres, par le biais du traitement thermique simultané d'un grand nombre de plaques de verre à tester et par leur chauffage aussi rapide et uniforme que possible. Pour l'exécution du test, on utilise des fours appropriés à chambres fermées. En raison de la conductibilité thermique médiocre du verre, un chauffage par convection paraît plus judicieux qu'un chauffage par rayonnement.

Le document DD 159 769 décrit un four à chambres à convection chauffé électriquement pourvu de soufflantes pour le traitement thermique des produits de verre. Grâce à ce four, la vitesse de réponse des verres photosensibles, c'est-à-dire combinés à des halogénures d'argent, peut être optimalisée. C'est pourquoi une répartition et un pilotage homogènes de la température dans les chambres de chargement rectangulaires revêtent une importance particulière. L'objectif de ce four à convection connu est de minimiser les pertes de température dans la chambre de chargement lors du traitement thermique d'un grand nombre de pièces ou de produits de verre volumineux. A cette fin, un système complexe et coûteux de conduits d'amenée d'air est utilisé, par lequel des fractions du flux d'air peuvent être séparées et/ou mélangées au moyen de clapets mobiles.

La soufflante et le dispositif de chauffage se trouvent au-dessus de la chambre de chargement, et le flux d'air est amené de cet endroit par des conduits vers le fond jusqu'au fond de la chambre traversée de bas en haut par le flux d'air. Dans la chambre de chargement, les produits de verre sont déposés dans un chariot à palettes pourvu d'ouvertures pour la circulation de l'air.

Le document DD précité ne fournit aucune indication quant à la manière dont le soufflage d'air chaud sur les différents produits de verre pourrait être optimalisé, et il subsiste manifestement des espaces vides entre les parois du chariot à palettes et la chambre de chargement. Etant donné que des éclats de plaques de verre brisés tombent inévitablement sur le fond de la chambre du four durant le processus de Heat-Soak-Test, des ouvertures de soufflage pratiquées dans le fond en vue du passage du flux d'air chaud doivent être soigneusement évitées dans les installations destinées à ce procédé afin de ne pas entraver inutilement l'enlèvement des plaques de verre.

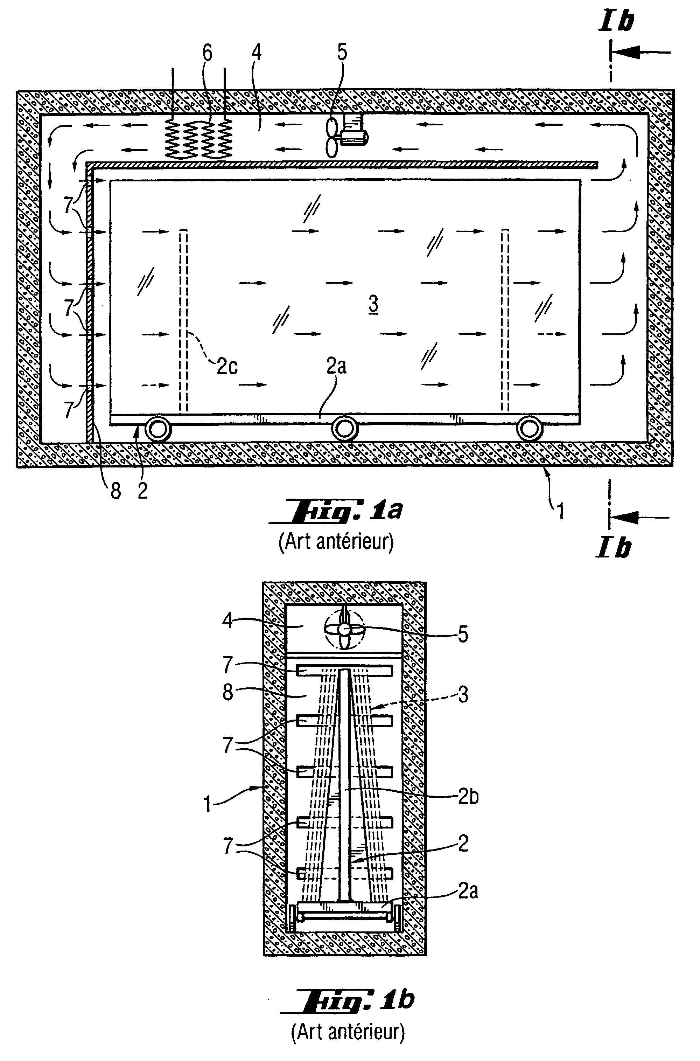

Dans d'autres fours traditionnels de type Heat-Soak (voir Fig. 1a et 1b), l'air chauffé est refoulé à travers une chambre contenant les plaques de verre en direction longitudinale au moyen d'un ventilateur ou d'une soufflante. Pour le chargement et le déchargement de la chambre, on utilise par exemple un chevalet ou bâti en A comprenant une structure sous-jacente en forme d'échelle et une paroi de chevalet centrale. Les plaques de verre sont disposées sur ce chevalet de part et d'autre de la paroi centrale en deux paquets de plaques de verre parallèles inclinés chacun légèrement par rapport à la verticale et divergeant vers le bas. Au moyen par exemple de barres verticales, les plaques de verre sont maintenues à distance l'une de l'autre. La section totale de la chambre traversée par le flux d'air est sensiblement plus grande que la section du chevalet avec les plaques de verre devant être testées. Etant donné que l'air refoulé peut également passer tout autour de l'ensemble du chevalet et des paquets de plaques de verre, les interstices séparant les plaques de verre ne sont pas traversés par un flux d'air suffisant. Les plaques de verre situées à l'intérieur du paquet ne sont dès lors chauffées ou refroidies qu'avec un certain retard, de sorte que les cycles de test nécessitent un temps relativement long.

L'invention a pour but de procurer une installation améliorée pour le traitement thermique des plaques de verre, en particulier pour l'exécution du processus Heat-Soak-Test.

Ce but est atteint suivant l'invention par l'installation décrite dans la revendication 1. Les caractéristiques des revendications dépendantes présentent des développements avantageux de l'invention.

L'ensemble composé du chevalet, des entretoises et des plaques de verre doit être considéré, dans la circulation d'air à l'intérieur de la chambre, comme un étranglement ou une résistance au flux. Si l'on veut que les interstices entre les plaques de verre soient traversés par un flux d'air uniforme, il convient d'éviter dans la mesure du possible les flux dérivés entre les parois de la chambre et les plaques de verre, ou de minimiser leur section, de telle sorte qu'une différence de pression suffisante puisse s'établir entre le côté de soufflage de l'air et le côté d'écoulement.

L'invention concerne une installation pour le traitement thermique de plaques de verre parallèles maintenues à distance l'une de l'autre en formant des interstices entre lesdites plaques, en particulier pour l'exécution d'un Heat- Soak-Test, qui comprend :
- au moins une chambre pouvant être chauffée,
- au moins un chevalet pourvu d'entretoises pour accueillir plusieurs plaques de verre dans la chambre,
- des moyens pour produire à l'intérieur de la chambre un flux d'air réglant la température des plaques de verre par convection,
et dont la section d'admission du flux d'air en circulation à l'arrivée dans les interstices est limitée aux dimensions extérieures, du côté du soufflage de l'air, de l'ensemble composé des plaques de verre et du chevalet se trouvant à l'intérieur de la chambre, une différence de pression suffisante entre le côté de soufflage de l'air dans les interstices et le côté d'écoulement de l'air hors desdits interstices étant créé. Cette limitation est efficace au moins lorsque la chambre et la soufflante sont en service après le chargement. En effet, si une arrivée d'air est présente à l'occasion dans lesdits interstices, les plaques de verre de grande superficie forment des parois de conduits entre lesquelles une circulation d'air se forme.

Afin d'atteindre un échange thermique (convection) aussi efficace que possible entre l'air circulant et les plaques de verre, les perturbations et/ou les écoulements temporaires du flux d'air à l'intérieur des paquets de plaques de verre doivent également être éliminés dans une large mesure. Il est par conséquent conseillé, suivant une autre réalisation, d'agencer la direction de circulation de l'air parallèlement au sens longitudinal des entretoises du chevalet. De cette manière, les entretoises, qui sont agencées avantageusement aussi près que possible des bords d'about des plaques de verre et, si nécessaire, servent également d'appuis intermédiaires, forment des parois de conduits supplémentaires qui empêchent l'écoulement temporaire de l'air hors des interstices vers les côtés (transversalement à la direction principale de la circulation).

En ce qui concerne la configuration extérieure du chevalet en A utilisé à titre d'exemple et des plaques de verre reposant sur celui-ci, il s'est avéré particulièrement avantageux, suivant une autre réalisation, de diriger l'air circulant en sens vertical de haut en bas le long des plaques de verre. De cette manière, le côté exposé à la pression - à la pointe du A - ne dispose que d'une section de circulation relativement petite, ce qui entraîne la formation de la différence de pression nécessaire. Le fond de la chambre peut être réalisé sous une forme lisse et plane, car aucune mesure spécifique n'est exigée à cet endroit pour l'orientation de l'air circulant. Cette propriété est également avantageuse lors du remplacement du chargement et lors de l'enlèvement des éclats inévitables. Lorsque les plaques de verre sont agencées verticalement, ces derniers tombent simplement du support ou dans la chambre au fond de celle-ci sans occasionner de dégâts supplémentaires.

La disposition verticale des plaques de verre n'est toutefois pas absolument indispensable pour le guidage précité de l'air circulant ou le réglage de la section indiqué. Au contraire, l'installation peut également fonctionner avec un bâti de support sur lequel les plaques de verre reposent à plat. Dans ce cas, l'air circulant doit bien entendu être dirigé dans le sens horizontal le long des plaques de verre et à travers les espaces libres entre elles, également de manière avantageuse dans la direction du sens longitudinal des entretoises. Dans cette disposition, il convient de prendre des mesures appropriées afin d'éviter l'endommagement des plaques de verre pouvant être provoqué par les éclats inévitables d'autres plaques.

Suivant un autre aspect de réalisation avantageux, la chambre comprend au moins une paroi mobile pour le réglage variable de la section de circulation dans la zone du chevalet. Ainsi, on combine une large section de repos servant au remplacement du chargement et une adaptation flexible de la section d'admission disponible en fonction du degré de chargement et/ou de la taille du chevalet ou des plaques de verre. Dans la réalisation préférée du chevalet utilisé dans la chambre, qui est symétrique et peut être chargé des deux côtés, des parois mobiles sont prévues dans la chambre des deux côtés au niveau de ses faces parallèles aux plaques de verre.

Une chambre équipée d'un chevalet incorporé à demeure est également envisageable. Si le degré de chargement de ce chevalet en fonctionnement est toujours identique, on pourrait même opérer avec une section d'admission non réglable.

Dans une construction appropriée des parois mobiles ou de leurs articulations, celles-ci peuvent également adopter différentes positions de fonctionnement suivant les besoins afin de compenser les différences de chargement ou de taille entre les différents chevalets et chargements de plaques de verre. Leur actionnement, ou le réglage des différentes positions, peut par exemple être réalisé de manière purement mécanique à la main. Toutefois, on peut également installer des commandes automatiques, qui interagissent avec la mise en marche de la soufflante ou la fermeture de la chambre après son chargement.

Une autre possibilité réside dans le réglage suivant les besoins de la largeur intérieure de la fente de décharge par le haut même au moyen de parois mobiles. A cette fin, on peut par exemple réaliser la longueur des sections de paroi coudées de manière à qu'elle soit variable.

D'autres particularités et avantages de l'invention découlent des dessins annexés et de leur description approfondie figurant ci-après.

De manière extrêmement simplifiée,
les Fig. 1a, 1b montrent deux schémas en perspective d'un four Heat-Soak connu; et,
la Fig. 2 montre une forme de réalisation de l'invention dans laquelle la moitié gauche de la figure représente l'état de la chambre pendant le chargement et le déchargement et la moitié droite illustre son état en fonctionnement avec la soufflerie en activité.

Comme le montrent les Fig. 1a et 1b, une installation pour le traitement thermique de plaques de verre comprend une chambre calorifugée 1, qui peut être chargée du côté droit (Fig. 1a), au moyen de portes, d'une manière non représentée. Dans la chambre 1 se trouve un chevalet roulant 2. Dans la vue de la Fig. 1b qui est tournée de 90° par rapport à la Fig. 1a, on peut constater que le chevalet 2 possède un châssis inférieur 2a et une paroi de chevalet médiane 2b, des deux côtés de laquelle est agencé un paquet légèrement incliné par rapport à la verticale de plaques de verre 3 disposées parallèlement sur une plate-forme de chargement. Entre les différentes plaques de verre, des entretoises verticales 2c forment des interstices. Sous le plafond de la chambre 1 se trouve un conduit de circulation 4 avec une soufflante 5 et un échangeur de chaleur 6 situé en aval de celle-ci, pouvant être réglé d'une manière qui n'est pas représentée plus précisément. La soufflante 5 aspire dans la chambre 1 soumise à la pression atmosphérique à partir de la droite dans le conduit de circulation 4. Le flux d'air atteint tout d'abord l'échangeur de chaleur 6 et est porté par celui-ci à la température souhaitée. Sur la paroi d'about gauche de la chambre, le flux d'air est tout d'abord dévié à 90°, puis il pénètre dans la chambre 1 à travers une paroi de séparation 8 pourvue d'orifices 7, après une nouvelle déviation de 90°, chambre dans laquelle il rencontre la tranche des plaques de verre. Le chevalet adjacent aux plaques est essentiellement enveloppé et balayé par le flux d'air dans le sens longitudinal. La température est transmise du flux d'air aux plaques de verre et au chevalet par convection. Comme cela a été évoqué en introduction, les entretoises 2c empêchent toutefois la circulation de l'air dans les interstices séparant les différentes plaques 3.

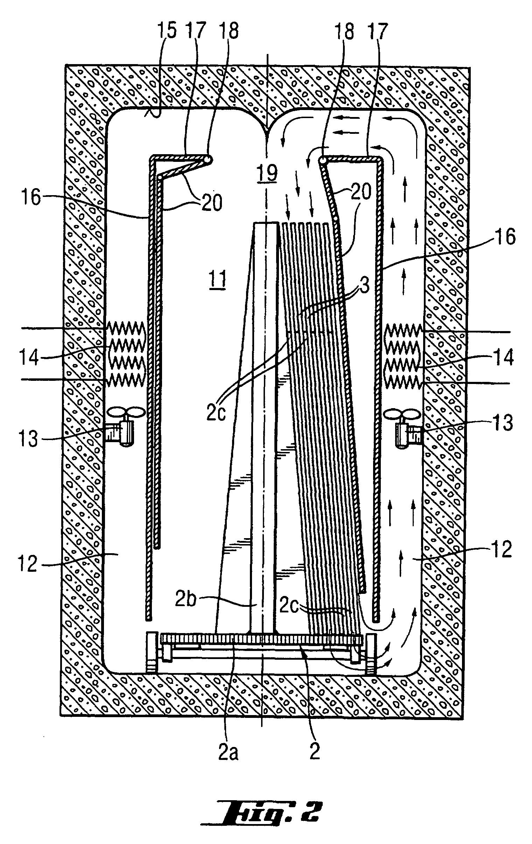

Par contre, la Fig. 2 représente une installation modifiée permettant de créer une meilleure circulation d'air à travers les paquets de plaques de verre, qui comprend une chambre 11, le chevalet symétrique 2 se trouvant à l'intérieur de celle-ci et les plaques de verre 3 avec les entretoises 2c intercalées en vue en haut suivant la Fig. 1b. On observe depuis l'extérieur, l'intérieur de la chambre ouverte en vue du remplacement de son chargement, laquelle chambre peut être fermée, au moins au niveau d'une de ses faces d'about, au moyen de portes non représentées.

La moitié gauche de la Fig. 2 représente l'état de la chambre symétrique pendant le chargement et le déchargement, tandis que la moitié droite illustre son état avec la soufflante en fonctionnement.

Une première mesure pour améliorer la transmission de chaleur de l'air soufflé vers les plaques de verre réside dans une modification de la direction de circulation. On peut observer que, des deux côtés du chevalet 2 sur les côtés longitudinaux de la chambre 11 sont installés des conduits de circulation 12 munis de soufflantes intégrées 13 et en aval de celles-ci, des échangeurs de chaleur 14. Les soufflantes 13 refoulent chacune un flux d'air en sens vertical du fond de la chambre 11 vers le haut jusqu'à son plafond 15.

Les conduits de circulation 12 sont isolés de la chambre 11 au moyen de parois de séparation 16 verticales fixes, qui s'étendent sur toute la longueur de la chambre entre ses faces d'about. Sous le plafond 15, des sections de paroi 17 coudées vers le milieu de la chambre se raccordent aux parois de séparation 16, lesquelles sections ne forment entre leurs bords d'extrémité 18 qu'une fente de décharge par le haut 19, dont la largeur intérieure est sensiblement inférieure à la largeur de la chambre 11.

A titre d'autre mesure pour améliorer encore la circulation de l'air autour des différentes plaques de verre, des parois mobiles 20 sont installées dans la chambre 11. Ces parois s'étendent, à l'intérieur de la chambre 11, sur la même longueur que les parois de séparation 16 des conduits de circulation. Elles sont articulées dans la zone des bords d'extrémité 18 des sections de paroi 17 des parois de séparation et peuvent être fixées dans différentes positions d'une manière qui n'est pas représentée plus en détail.

La paroi mobile 20 du côté gauche se trouve dans une position de chargement et de déchargement, dans laquelle elle s'applique depuis l'extérieur sur la paroi de séparation 16 divisant le conduit de circulation 12. De cette manière, il reste un espace relativement important entre le chevalet 2 chargé et la paroi 20.

La paroi mobile 20 du côté droit, en revanche, est dans sa position de fonctionnement, rapprochée autant que possible de la plaque de verre extérieure 3 du paquet de plaques de verre droit, sans toutefois la toucher. Au contraire, un espace de passage relativement étroit doit subsister entre la paroi et la plaque de verre, de telle sorte que la face extérieure de la plaque de verre extérieure du paquet soit également exposée au flux d'air.

On constate sans plus que ces mesures permettent de réaliser une nette amélioration du soufflage et de la circulation de l'air sur les plaques de verre à traiter même en cas d'utilisation du même chevalet que celui de l'état actuel de la technique. Dans la représentation fortement schématisée, des aubes directrices et des organes analogues ont été omis. Toutefois, les conduits de circulation et leurs parois, ainsi que le plafond 15 de la chambre, possèdent bien entendu des dispositifs de guidage appropriés pour minimiser les résistances à l'écoulement. En cas de besoin, on peut installer dans la section plate et large des conduits de circulation plusieurs soufflantes et échangeurs de chaleur côte à côte. On peut également prévoir des moyens de guidage du flux d'air qui resserrent tout d'abord le flux d'air au départ de la large zone d'aspiration à proximité du fond de la chambre, l'amènent ensuite à la soufflante respective avec échangeur de chaleur, puis le redistribuent sur la longueur de la chambre. Dans la fente de décharge 19, il convient de veiller à une circulation et à une température homogènes sur toute la longueur.

Au niveau du plafond 15, les flux d'air issus des deux conduits de circulation sont déviés de 90° au-dessus des sections de paroi 17, puis sont réunis et mélangés au milieu de la chambre 11. Avec un profil de circulation homogène sur toute la longueur de la chambre 11, le flux complet est dévié vers le bas au milieu du plafond au moyen du dispositif de guidage indiqué. Il traverse la fente de décharge par le haut 19, sa direction de circulation étant orientée vers le bas, et rencontre les bords supérieurs des plaques de verre 3 agencées verticalement et du chevalet 2. En raison de la fente étroite entre les parois mobiles 20 amenées en position de fonctionnement et les plaques de verre extérieures du paquet, aucun flux de dérivation nuisible à l'efficacité ne se produit. En outre, la fente de décharge par le haut 19 définit une section de passage totale relativement petite, de sorte qu'une pression considérable peut se constituer sur le dessus du paquet de plaques de verre. A l'inverse, il règne au fond de la chambre et sous le chevalet, ou au niveau des bords inférieurs des plaques de verre, une pression relativement faible, car les soufflantes aspirent dans cette zone. Par comparaison à l'état de la technique illustré, le trajet total du flux d'air à travers les interstices est également plus court, de sorte que les différences thermiques intérieures dans les plaques de verre qui apparaissent à l'intérieur de ce parcours sont diminuées le long de la direction de circulation.

Ainsi, tous les interstices séparant les différentes plaques de verre, ainsi que les parois mobiles et les plaques de verre situées à l'extrémité du paquet, sont exposés à un flux d'air uniforme de haut en bas, dont la direction de circulation s'étend parallèlement à la longueur des entretoises intercalées entre les plaques de verre. On obtient de cette manière une transmission thermique très efficace et uniforme entre les plaques de verre et l'air circulant.

A la différence de la représentation de principe, on peut également opérer avec seulement un conduit de circulation latéral lorsqu'on utilise des soufflantes et des échangeurs de chaleur suffisamment performants suivant l'état actuel de la technique.

On peut également employer des soufflantes d'un type qui dévie le flux d'air à l'intérieur de leur boîtier (ventilateurs à cylindre ou à courant transversal) et les installer dans les coins supérieurs de la chambre. Le type de soufflante et d'échangeur de chaleur et leur disposition dans la chambre ne revêtent toutefois pas une importance décisive dans la réalisation de l'invention. Il convient toutefois de souligner que le concept échangeur de chaleur est utilisé pour indiquer que l'installation décrite permet de réaliser non seulement un chauffage des plaques de verre, mais également un parcours précis de cycles programmés de changements de température impliquant un chauffage et un refroidissement successifs.

Pour le refroidissement si nécessaire du flux d'air, on peut également, au lieu de refroidir uniquement l'air circulant à l'aide de l'échangeur de chaleur, introduire de l'air extérieur et raccourcir ainsi la durée du refroidissement; l'installation n'est donc pas limitée à un fonctionnement au moyen d'air circulant. De manière générale, l'installation n'est pas non plus limitée au Heat-Soak-Test, bien qu'elle soit particulièrement adaptée à ses exigences.

Il est en outre entendu que, en cas d'utilisation d'autres constructions de chevalet, en particulier un chevalet asymétrique avec une seule plate-forme de chargement, la chambre correspondante devra également être adaptée. En particulier, il n'est pas absolument indispensable de prévoir deux parois mobiles lorsqu'une relation de position précise peut être assurée entre un côté du chevalet et le cas échéant son chargement, et une paroi fixe de la chambre.

## Revendications

1. Installation pour le traitement thermique de plaques de verre (3) parallèles maintenues à distance l'une de l'autre en formant des interstices entre lesdites plaques, en particulier pour l'exécution d'un Heat- Soak-Test, qui comprend :
- au moins une chambre (11) pouvant être chauffée,
- au moins un chevalet (2) pourvu d'entretoises (2c) pour accueillir plusieurs plaques de verre (3) dans la chambre,
- des moyens (13) pour produire à l'intérieur de la chambre un flux d'air réglant la température des plaques de verre par convection,
**caractérisée en ce que** la section d'admission du flux d'air à l'arrivée dans les interstices est limitée aux dimensions extérieures, du côté du soufflage de l'air, de l'ensemble composé des plaques de verre (3) et du chevalet (2) situé à l'intérieur de la chambre (11) et **en ce qu'**une différence de pression suffisante entre le côté de soufflage de l'air dans lesdits interstices et le côté d'écoulement de l'air hors desdits interstices est créée.

2. Installation selon la revendication précédente, **caractérisée en ce que** l'air circulant passe par une fente de décharge par le haut (19) correspondant à la section d'admission du flux d'air et ayant pour effet que l'air circulant, après avoir traversé ladite fente, rencontre les bords supérieurs des plaques de verre et est amené de haut en bas le long des plaques de verre et à travers les interstices libres formés au moyen des entretoises (2c).

3. Installation suivant l'une des revendications précédentes, **caractérisée en ce que** la direction principale de circulation de l'air entre les plaques de verre (3) est agencée parallèlement au sens longitudinal des entretoises (2c).

4. Installation suivant la revendication précédente, **caractérisée en ce que** les entretoises (2c) sont agencées aussi près que possible des bords de tranche des plaques de verre.

5. Installation suivant l'une quelconque des revendications précédentes, **caractérisée en ce que**, dans la chambre (11), est agencée au moins une paroi mobile (20) destinée à régler la section du flux d'air dans la zone du chevalet (2) se trouvant à l'intérieur de la chambre.

6. Installation suivant la revendication précédente, **caractérisé en ce que**, en cas de réalisation symétrique, pouvant être chargée des deux côtés, du chevalet (2) utilisé à l'intérieur de la chambre (11), des parois de chambre mobiles (20) sont prévues sur les deux côtés du chevalet et s'étendent parallèlement aux plaques de verre (3).

7. Installation suivant la revendication 5 ou 6, **caractérisée en ce que** l'air circulant passe par une fente de décharge par le haut (19) correspondant à la section d'admission du flux d'air, ladite fente étant limitée par des parois mobiles permettant de modifier sa largeur.

8. Installation selon l'une des revendications 5 à 7, **caractérisée en ce que** des entretoises sont intercalées entre la ou les parois mobiles et la ou les plaques de verre située(s) à l'extérieur.

9. Installation suivant l'une des revendications précédentes, **caractérisée en ce que** les moyens pour produire le flux d'air à l'intérieur de la chambre comprennent au moins un conduit de circulation (12) muni d'une soufflante (13).

10. Installation suivant la revendication précédente, **caractérisée en ce que**, en cas d'utilisation d'un chevalet (2) symétrique dans la chambre, un conduit de circulation (12) muni de soufflantes (13) est prévu au niveau des deux côtés longitudinaux de la chambre, les flux d'air des deux conduits pouvant être réunis dans ou avant la fente de décharge par le haut (19).

11. Installation suivant l'une quelconque des revendications précédentes, **caractérisée en ce qu'**il est prévu au moins un échangeur de chaleur (14) convenant aussi bien pour le chauffage que pour le refroidissement de l'air circulant.

## Patentansprüche

1. Vorrichtung zur Wärmebehandlung von parallelen Glasplatten (3), die durch Bildung von Freiräumen zwischen den besagten Platten auf Abstand voneinander gehaltenen werden, insbesondere zum Durchführen eines Heat-Soak-Tests, umfassend
- mindestens eine beheizbare Kammer (11),
- mindestens ein Gestell (2) mit Abstandhaltern (2c) zum Aufnehmen mehrerer Glasplatten (3) in der Kammer,
- Mittel (13) zum Erzeugen einer die Temperatur der Glasplatten durch Konvektion einstellenden Strömung innerhalb der Kammer,
**dadurch gekennzeichnet, dass** der Einströmungsbereich der Strömung in den Zwischenräumen auf die anströmseitigen äußeren Abmessungen der in der Kammer (11) befindlichen Gesamtheit aus Glasplatten (3) und Gestell (2) begrenzt ist und ein notwendiger Druckunterschied zwischen der Anströmseite in den besagten Zwischenräumen und der Abströmseite außerhalb der besagten Zwischenräume entsteht.

2. Vorrichtung nach vorstehendem Anspruch, **dadurch gekennzeichnet, dass** die Strömung über einen Überströmspalt (19) in den Einströmungsbereich fließt und als Effekt die Strömung, nach dem passieren des besagten Spalts, auf die Oberkanten der Glasplatten trifft und von oben nach unten an den Glasplatten entlang und durch die mittels der Abstandhalter (2c) gebildeten Zwischenräume geführt wird.

3. Vorrichtung nach einem der vorstehenden Ansprüche, **dadurch gekennzeichnet, dass** die Hauptbewegungsrichtung der Luft zwischen den Glasplatten (3) parallel zur Längserstreckung der Abstandhalter (2c) gerichtet ist.

4. Vorrichtung nach vorstehendem Anspruch, **dadurch gekennzeichnet, dass** die Abstandhalter (2c) möglichst nahe zu den Stirnseiten der Glasplatten hin angeordnet sind.

5. Vorrichtung nach einem der vorstehenden Ansprüche, **dadurch gekennzeichnet, dass** in der Kammer (11) mindestens eine bewegliche Wand (20) zum Einstellen des Strömungsquerschnitts im Bereich des in der Kammer befindlichen Gestells (2) vorgesehen ist.

6. Vorrichtung nach vorstehendem Anspruch, **dadurch gekennzeichnet, dass** bei einer symmetrischen, zweiseitig beladbaren Ausbildung des in der Kammer (11) verwendeten Gestells (2) an deren beiden zu den Glasplatten (3) parallelen Seiten bewegliche Kammerwände (20) vorgesehen sind.

7. Vorrichtung nach Anspruch 5 oder 6, **dadurch gekennzeichnet, dass** die Strömung über einen Überströmspalt (19) in den Einströmungsbereich fließt, der besagte Spalt mittels beweglicher Wände begrenzt ist, was eine Veränderung seiner Länge ermöglicht.

8. Vorrichtung nach einem der Ansprüche 5 bis 7, **dadurch gekennzeichnet, dass** die Abstandhalter zwischen der beweglichen Wand oder den beweglichen Wänden und der oder den außerhalb angeordneten Glasscheibe(n) eingefügt sind.

9. Vorrichtung nach einem der vorstehenden Ansprüche, **dadurch gekennzeichnet, dass** die Mittel zur Herstellung der Strömung innerhalb der Kammer mindestens einen Strömungskanal (12) mit einem Gebläse (13) umfassen.

10. Vorrichtung nach vorstehendem Anspruch, **dadurch gekennzeichnet, dass** im Fall der Verwendung eines symmetrischen Gestells (2) in der Kammer (11) an deren beiden Längsseiten je ein Strömungskanal (12) mit Gebläse (13) vorgesehen ist, wobei die Strömungen in beiden Kanälen in oder vor dem Überströmspalt (19) zusammenführbar sind.

11. Vorrichtung nach einem der vorstehenden Ansprüche, **dadurch gekennzeichnet, dass** mindestens ein sowohl zum Beheizen als auch zum Kühlen der Strömung geeigneter Wärmetauscher (14) vorgesehen ist.

## Claims

1. Installation for the heat treatment of parallel glass plates (3) maintained at a distance from each other whilst forming gaps between the said plates, in particular for executing a heat-soak test, which comprises:
- at least one chamber (11) able to be heated,
- at least one frame (2) provided with struts (2c) for accepting several plates of glass (3) in the chamber,
- means (13) for producing inside the chamber a flow of air regulating the temperature of the glass plates by convection,
**characterised in that** the cross-section of admission of the air flow at the entry to the gaps is limited to the external dimensions, on the air blowing side, of the assembly composed of the glass plates (3) and the frame (2) situated inside the chamber (11) and **in that** a sufficient pressure difference between the side blowing air into the said gaps and the air flow out of the said gaps is created.

2. Installation according to the preceding claim, **characterised in that** the circulating air passes through a top discharge slot (19) corresponding to the cross-section of admission of the air flow and having the effect that the circulating air, after having passed through the said slot, encounters the top edges of the glass plates and is brought from top to bottom along the glass plates and through the free gaps formed by means of the struts (2c).

3. Installation according to one of the preceding claims, **characterised in that** the main direction of air circulation between the glass plates (3) is arranged parallel to the longitudinal direction of the struts (2c).

4. Installation according to the preceding claim, **characterised in that** the struts (2c) are arranged as close as possible to the edges of the glass plates.

5. Installation according to any one of the preceding claims, **characterised in that**, in the chamber (11), there is arranged at least one movable wall (20) intended to adjust the cross-section of the air flow in the area of the frame (2) situated inside the chamber.

6. Installation according to the preceding claim, **characterised in that**, in the case of symmetrical design, able to be loaded from both sides, of the frame (2) used inside the chamber (11), movable chamber walls (20) are provided on both sides of the frame and extend parallel to the glass plates (3).

7. Installation according to Claim 5 or 6, **characterised in that** the circulating air passes through a top discharge slot (19) corresponding to the cross-section of admission of the air flow, the said slot being delimited by movable walls for modifying its width.

8. Installation according to one of Claims 5 to 7, **characterised in that** the struts are interposed between the movable wall or walls and the glass plate or plates situated to the outside.

9. Installation according to one of the preceding claims, **characterised in that** the means for producing the air flow inside the chamber comprise at least one circulation conduit (12) provided with a blower (13).

10. Installation according to the preceding claim, **characterised in that**, in the case of the use of a symmetrical frame (2) in the chamber, a circulation conduit (12) provided with blowers (13) is provided at the two longitudinal sides of the chamber, the air flows of the two conduits being able to be combined in or in front of the top discharge slot (19).

11. Installation according to any one of the preceding claims, **characterised in that** at least one heat exchanger (14) is provided, suitable either for heating or for cooling the circulating air.
